# FASCICULE DE BREVET EUROPEEN

(11) **EP 0 455 558 B1**
(45) Date de publication et mention de la délivrance du brevet: **22.12.1993**
(21) Numéro de dépôt: 91401162.2
(22) Date de dépôt: 02.05.1991
(51) Int. Cl.: F16B 7/10

(54) **Dispositif d'immobilisation axiale temporaire d'un axe dans un corps tel qu'un tube enveloppé de colonne de direction**
Vorrichtung zum zeitweiligen Festhalten einer Achse in einem Körper, insbesondere Lenksäulenummantelung
Device for temporarily holding of an axle in a body for example steering column envelope

(30) Priorité: 03.05.1990 FR 9005589
(43) Date de publication de la demande: 06.11.1991
(73) Titulaire: ECIA - EQUIPEMENTS ET COMPOSANTS POUR L'INDUSTRIE AUTOMOBILE, F-25400 Audincourt (FR)
(72) Inventeur: Hoblingre, André, F-25700 Valentigney (FR); Courvoisier, Patrick, F-25600 Vieux Charmont (FR); Bari, Gérard, F-25700 Valentigney (FR)
(74) Mandataire: Habasque, Etienne Joel Jean-François

(56) Documents cités:
- EP-A- 0 071 220
- EP-A- 0 152 774
- DE-A- 2 814 818
- FR-A- 2 611 004

## Description

La présente invention concerne un dispositif permettant d'immobiliser temporairement en translation un axe par rapport à un corps ou tube dans lequel il est monté (voir par exemple le document EP-A-0 152 774), et tout particulièrement un axe de direction dans un tube enveloppe de colonne de direction de véhicule automobile.

Un axe de direction est en effet monté rotatif à l'intérieur du tube enveloppe de la colonne de direction par l'intermédiaire de paliers qui lui permettent de tourner librement. Certains paliers assurent également une immobilisation axiale de l'axe de direction par rapport au tube. Mais étant donné que ces paliers sont coûteux, on a tendance de plus en plus souvent à les remplacer par des paliers moins chers, à aiguilles ou autres, qui autorisent un déplacement relatif en translation. En général cette liberté axiale de l'axe dans le tube ne présente pas d'inconvénient pour la réalisation et l'utilisation du véhicule, car, dans la plupart des cas, la fonction d'immobilisation axiale ne présente plus d'intérêt lorsque la colonne de direction est montée puisqu'elle est fixée sur le boîtier de direction qui est lui-même immobilisé. Par contre, lors du stockage ou de la manipulation de l'ensemble axe-colonne de direction, avant le montage, il existe un danger de séparation axiale de ces deux organes et par suite de détérioration de l'ensemble.

La présente invention a pour but de remédier à cela en fournissant un dispositif qui permette de maintenir l'axe et le tube dans une position axiale déterminée jusqu'à leur montage, et d'utiliser ainsi sans risque des paliers autorisant un déplacement en translation.

Cette invention a en effet pour objet un dispositif d'immobilisation axiale temporaire d'un axe dans un corps, tel qu'un tube de colonne de direction de véhicule, qui comporte une rondelle solidaire de l'axe et un organe de blocage fixé de manière démontable dans un orifice du tube et formant à l'intérieur de ce dernier deux surfaces radiales de butée empêchant le déplacement relatif en translation de la rondelle.

De préférence la rondelle comporte au moins une nervure circonférentielle qui se chevauchent avec les surfaces de butée de l'organe de blocage.

Selon une autre caractéristique, le dispositif d'immobilisation comporte également des moyens de retrait de l'organe de blocage portés par la collerette et/ou par l'organe de blocage lui-même.

Tout déplacement axial relatif de l'axe par rapport au tube étant interdit par la coopération de la rondelle avec l'une ou l'autre des surfaces de butée, l'ensemble formé par l'axe et le tube peut être déplacé, stocké et même monté sans risque de séparation intempestive ou de modification de la position initialement donnée. Par contre, l'axe reste libre de tourner à l'intérieur du tube et le blocage peut aisément être supprimé dès que cela est nécessaire.

La description ci-dessous de modes de réalisation, donnés à titre d'exemple non limitatif et représentés aux dessins annexés, fera d'ailleurs ressortir les avantages et caractéristiques de l'invention. Sur ces dessins :

La figure 1 est une vue partielle, en coupe longitudinale, d'une colonne de direction munie d'un dispositif selon l'invention.

La figure 2 est une vue en coupe suivant la ligne 2/2 de la Fig.1.

La figure 3 est une vue en coupe, à plus grande échelle, suivant la ligne 3/3 de la Fig.2.

La figure 4 est une vue en perspective de l'organe de blocage du dispositif de l'invention.

La figure 5 est une vue en perspective d'une variante de réalisation de l'organe de blocage.

La figure 6 est une vue partielle, en coupe longitudinale, d'une colonne de direction utilisant l'organe de blocage de la Fig.5.

La figure 7 est une vue en coupe, avec arrachement partiel, prise suivant la ligne 7/7 de la Fig.6.

La figure 8 est une vue analogue à la Fig.3 d'une variante de réalisation.

La figure 9 est une vue analogue à la Fig.8 d'une autre variante de réalisation, avant la mise en place de l'organe de blocage.

Les modes de réalisation représentés sur les dessins concernent l'application du dispositif d'immobilisation temporaire, objet de l'invention, au maintien d'un axe de direction à l'intérieur d'un tube enveloppe de colonne de direction de véhicule automobile, mais il apparaîtra clairement que ceci n'est donné qu'à titre d'exemple et que ce dispositif peut être utilisé pour le maintien de tout arbre, plein ou creux, à l'intérieur d'un corps ou d'un tube, chaque fois qu'il est nécessaire d'éviter leur déplacement relatif axial, temporairement, par exemple pendant un stockage ou un transport.

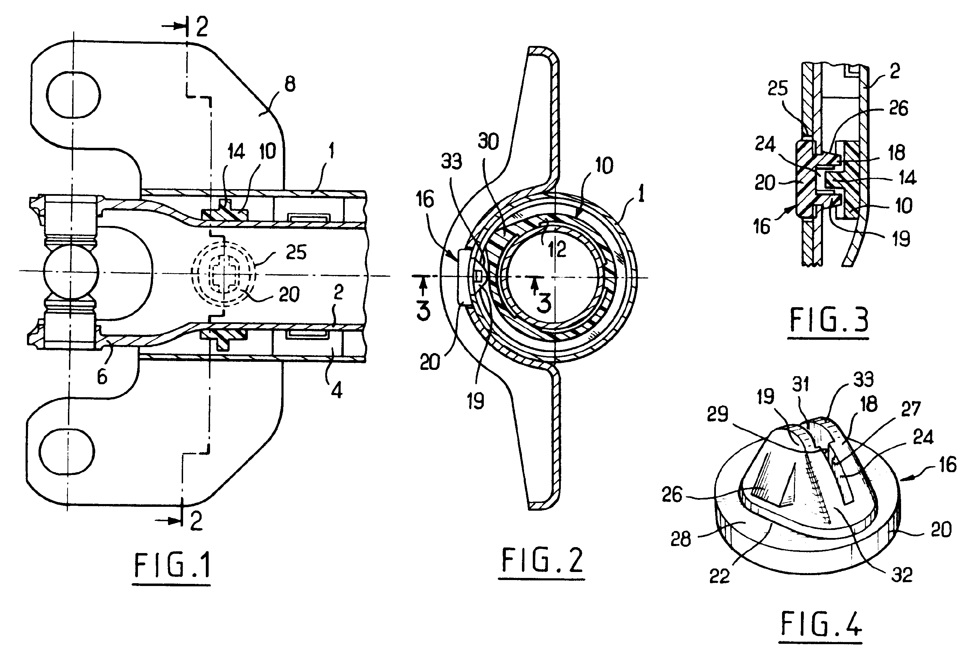

La colonne de direction représentée sur les Fig.1 à 3 comporte un tube enveloppe 1 à l'intérieur duquel un axe de direction 2 est monté rotatif par l'intermédiaire de paliers 4, de type à aiguilles ou analogue, autorisant un déplacement en translation. Seule la partie inférieure de l'ensemble axe-tube-enveloppe est représentée. A cette extrémité l'axe 2 est terminé par une fourche de cardan 6 tandis que sur le tube 1 est fixée une ferrure 8 de liaison à la carrosserie.

Entre le palier 4 et la fourche de cardan 6, l'axe 2 porte une rondelle 10 ayant des saillies internes 12 régulièrement espacées qui sont écrasées contre la paroi de l'axe 2 et assurent ainsi une solidarisation complète de la rondelle et de l'axe. La rondelle 10 comporte en outre, dans sa partie médiane, un nervure ou collerette externe circonférentielle 14 dont le diamètre extérieur est légèrement inférieur au diamètre intérieur du tube 1.

En regard de la rondelle 10, le tube enveloppe 1 porte un organe de blocage 16 qui forme deux butées radiales de limitation du déplacement axial de la nervure 14 et par suite de l'axe 2.

Comme le montre plus clairement la Fig.4, l'organe de blocage 16 comporte une base 20 sensiblement cylindrique d'où part un cylindre à base oblongue 22 ayant une section droite plus petite. Le cylindre 22 est fendu diamétralement en 24 pour délimiter deux lèvres 18 et 19. La base 20 est logée avec jeu dans un orifice 25 de la ferrure de fixation 8 tandis que le cylindre 22 est exactement emboîté dans un trou oblong du tube enveloppe 1 (Fig.2 et 3). Ce cylindre 22 est d'ailleurs immobilisé dans ce trou par la coopération de saillies pyramidales 26, formées sur la face extérieure de chacune des lèvres 18 et 19, qui appuient sur la face interne du tube 1, avec la base 20 qui est en appui sur la face externe de ce même tube. Dans ce but, la base 20 comporte en regard du cylindre 22 une portée incurvée 28 ayant un rayon de courbure identique à celui de la face externe du tube 1.

L'organe de blocage 16 est ainsi solidement maintenu dans le tube 1 et forme à l'intérieur de ce dernier deux saillies fixes 18 et 19 espacées l'une de l'autre par la largeur de la fente 24 qui est légèrement supérieure à l'épaisseur de la nervure 14. Ces saillies ou lèvres 18, 19 chevauchent la nervure 14, leurs faces en regard 27, 29 étant situées de part et d'autre de cette dernière. Ces faces 27, 29 constituent donc des surfaces de butée empêchant le déplacement en translation de la nervure 14 qui ainsi est retenue sans serrage à l'intérieur de la fente 24 mais ne peut se déplacer axialement.

Dans le mode de réalisation représenté sur les Fig.1 à 3, la rondelle 10 comporte en outre une saillie locale 30 qui forme de part et d'autre de la nervure circonférentielle 14 une came d'éjection de l'organe de blocage 16. De préférence les lèvres radiales 18 et 19 sont également profilées et ont des parois latérales obliques 32 donnant à leur section droite radiale une forme générale en V couché avec un sommet arrondi 33 (Fig.2 et 4).

Ainsi lorsque l'immobilisation axiale n'est plus nécessaire, par exemple parce que l'ensemble formé par le tube 1 et l'axe 2 est monté sur le véhicule et prêt à être utilisé, une simple rotation de l'axe 2 à l'intérieur du tube 1 amène la came 30 en contact avec le sommet arrondi 33. En continuant sa rotation, cette came repousse ce sommet 33 et oblige l'organe de blocage 16 à quitter les orifices des tube 1 et ferrure 8. L'axe 2 n'est plus immobilisé axialement que du fait de son montage sur le véhicule et peut éventuellement être ajusté par rapport au tube 1, si nécessaire.

Le dispositif d'immobilisation selon l'invention permet donc à la fois de maintenir constantes les positions relatives initiales de l'axe 2 et du tube 1, et d'effectuer le montage et les réglages ultérieurs de la manière habituelle, en utilisant les possiblités de déplacement axial accordées par les paliers de support de l'axe.

Un tel dispositif est peu coûteux et facile à mettre en place puisqu'il suffit d'enfiler la rondelle 10 sur l'axe 2 jusqu'au voisinage de la fourche de cardan 6, avant l'introduction de cet axe dans le tube 1 et dans le palier 4, puis d'enfoncer l'organe de blocage 16 par l'orifice 25 de la ferrure 8 dans celui du tube 1 pour emboîter les lèvres 18 et 19 sur la nervure 14. Aucune précaution particulière n'est nécessaire.

De préférence toutefois l'organe de blocage est réalisé en une matière plastique et la fente 24 est élargie dans sa partie centrale 31, ce qui en accroissant la flexibilité des lèvres 18, 19 au droit des saillies 26, facilite la mise en place de l'organe de blocage et renforce la sécurité de sa fixation.

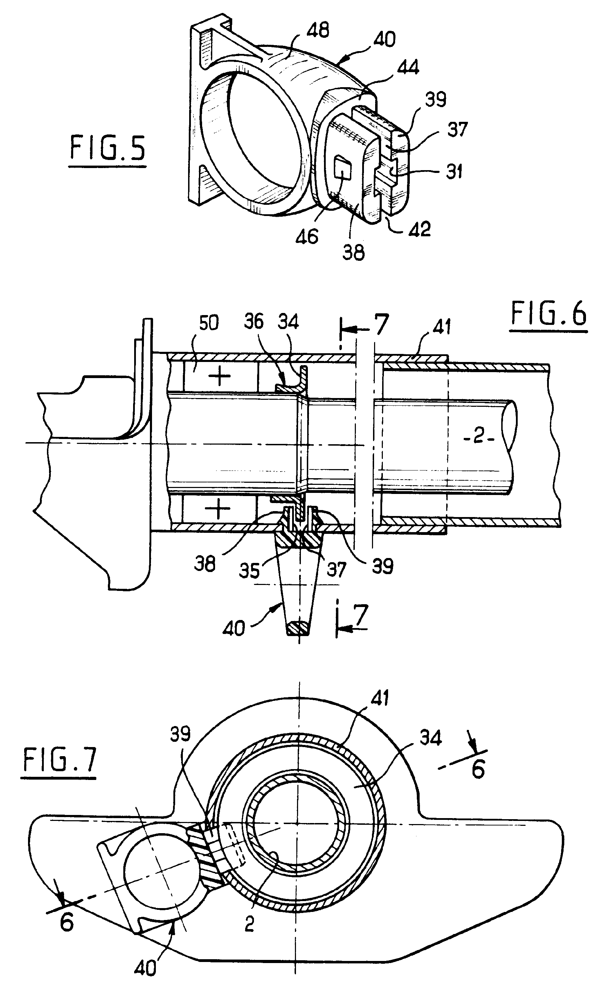

Selon une variante de réalisation représentée sur les Fig.5 à 7, l'axe 2 porte une collerette 34 qui est formée par l'aile radiale d'une rondelle en L, 36, rendue solidaire de l'axe 2. La rondelle 36 est de préférence en métal. Comme précédemment la collerette 34 est retenue entre les surfaces radiales en regard, respectivement 35 et 37, des deux lèvres 38 et 39 d'un organe de blocage 40 monté dans un orifice d'un tube enveloppe 41.

Les lèvres 38 et 39 sont séparées par une fente 42 ayant une largeur légèrement supérieure à celle de la collerette 34. Elles partent d'une portée incurvée 44 d'appui contre la face externe du tube 41 et portent des saillies externes 46 d'appui sur la face interne de ce même tube 41 et d'immobilisation de l'organe de blocage 40 par rapport à ce tube. Dans le mode de réalisation représenté, le trou du tube 41 a une forme oblongue et les deux lèvres radiales 38 et 39 ont des formes sensiblement plates.

De la même manière que l'organe de blocage 16, l'organe 40 est solidement maintenu sur le tube 1 et, par l'intermédiaire des surfaces de butée 35 et 37, interdit tout déplacement axial de la rondelle solidaire de l'axe 2, c'est-à-dire toute translation de cet axe par rapport au tube.

De préférence, comme le montre plus particulièrement la Fig.5, la portée incurvée 44 est formée par un prolongement latéral d'un anneau de préhension 48 qui constitue le corps de l'organe de blocage 40. Ainsi l'organe de blocage 40 peut aisément être retiré du tube 41 par une simple traction sur l'anneau de préhension 48 dès que l'immobilisation n'est plus utile. L'axe 2 est alors libre non seulement de tourner dans le tube 41 mais également de se déplacer axialement dans les paliers 50 qui le supportent.

Un tel mode de réalisation est tout particulièrement adapté à être monté dans un tube 41 dont l'extrémité est ouverte et la longueur limitée, par exemple dans un tube enveloppe de colonne rétractable. Dans ce cas la rondelle 36 est de préférence introduite dans le tube 41 par son extrémité ouverte, éloignée du palier 50. Elle est maintenue au moyen, par exemple, d'un outil, pendant l'introduction de l'axe 2 jusqu'à l'emboîtement complet de cet axe et la solidarisation totale de ces deux éléments. L'organe de blocage 40 peut alors être enfoncé dans la paroi du tube 41 pour immobiliser axialement la collerette 34.

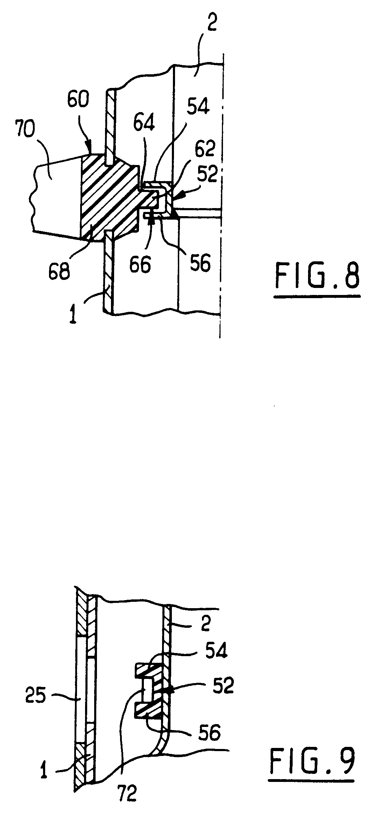

Selon une autre variante de réalisation, la rondelle 52 rendue solidaire de l'axe 2 comporte deux nervures circonférentielles, respectivement 54 et 56, et a, par exemple, comme représenté sur les Fig.8 et 9, une section droite axiale en forme de U couché. Cette rondelle coopère avec un organe de blocage 60 ayant une lèvre centrale 62 qui pénètre librement entre les nervures 54 et 56. Les faces opposées 64 et 66 de cette lèvre forment ainsi des surfaces radiales de butée qui coopèrent chacune avec l'une des nervures 54 ou 56 pour empêcher le déplacement relatif en translation de l'axe 2 et du tube 1.

La distance entre les nervures 54, 56 étant légèrement supérieure à l'épaisseur de la lèvre 62, celle-ci est emboîtée sans serrage entre ces nervures mais interdit cependant le déplacement axial relatif.

La lèvre 62 est formée à l'extrémité d'un corps 68 ayant, comme les organes 16 et 40, une portée incurvée d'appui sur la face externe du tube 1 et des saillies latérales d'accrochage sur la face interne de ce tube. Le corps 68 peut en outre être solidaire d'un anneau de préhension 70 (représenté partiellement sur la Fig.8) de façon à permettre son extraction manuelle.

Les moyens d'extraction peuvent également être constitués, comme le montre la Fig.9, par une came d'éjection 72 formée sur la rondelle 52 entre les deux nervures 54 et 56. La lèvre 62 est alors de préférence profilée et a une forme analogue à cette celle des lèvres de l'organe 16. Ainsi une rotation de l'axe 2 suffit pour provoquer l'extraction de l'organe de blocage 60 sous l'effet de l'effort exercé par la came 72 sur la lèvre 62.

Dans tous les cas on dispose donc d'un dispositif permettant d'immobiliser temporairement les deux éléments de l'ensemble axe-tube tant que cela est nécessaire, tout en conservant la possibilité d'autoriser à nouveau leur déplacement axial à tout moment.

L'organe de blocage 16 pourrait être muni de moyens de préhension et coopérer avec une rondelle dépourvue de came d'éjection 30.

## Revendications

1. Dispositif d'immobilisation axiale temporaire d'un axe dans un corps, caractérisé en ce qu'il comporte une rondelle (10, 36, 52) rendue solidaire de l'axe (2) et un organe de blocage (16, 40) fixé de manière démontable dans un orifice du corps (1, 41) et formant, à l'intérieur de ce dernier, deux surfaces radiales de butée (27, 29 - 35, 37) empêchant le déplacement relatif en translation de la rondelle.

2. Dispositif suivant la revendication 1, caractérisé en ce qu'il comporte en outre des moyens (30,32 - 48) de retrait de l'organe de blocage (16, 40), portés par la rondelle (10, 36) et/ou par l'organe de blocage lui-même.

3. Dispositif suivant l'une des revendications précédentes, caractérisé en ce que l'organe de blocage (16, 40) comporte des saillies (26, 46) de retenue sur ses faces extérieures et une portée (28, 44) d'appui contre la face extérieure du corps.

4. Dispositif suivant l'une des revendications précédentes, caractérisé en ce que l'organe de blocage (16, 40) est prolongé extérieurement par un moyen de préhension (48).

5. Dispositif suivant l'une des revendications 1 à 3, caractérisé en ce que la rondelle (10, 52) forme une came (30, 72) d'éjection de l'organe de blocage (16, 60).

6. Dispositif suivant l'une des revendications précédentes, caractérisé en ce que la rondelle comporte une collerette circonférentielle (14, 34) tandis que l'organe de blocage comporte deux lèvres (18, 19 - 38, 39) s'emboîtant librement de part et d'autre de cette collerette.

7. Dispositif suivant la revendication 6, caractérisé en ce que la collerette (14) est une nervure centrale circonférentielle d'une rondelle (10) emboîtée sur le tube.

8. Dispositif suivant la revendication 6, caractérisé en ce que la collerette est une nervure radiale d'extrémité (34) d'une rondelle de section en L (36).

9. Dispositif suivant l'une des revendications précédentes, caractérisé en ce que les lèvres de l'organe de blocage sont séparées par une fente (24, 42) qui est élargie dans sa partie centrale.

10. Dispositif suivant l'une des revendications 1 à 5, caractérisé en ce que la rondelle (52) comporte deux nervures circonférentielles (54, 56) de réception d'une lèvre (62) de l'organe de blocage, qui est délimitée par deux surfaces radiales de butée (64, 66).

11. Dispositif suivant l'une des revendications précédentes, caractérisé en ce que l'organe de blocage (16, 60) est profilé et a, à l'intérieur du tube, une section radiale en forme de V couché à sommet arrondi.

## Patentansprüche

1. Vorrichtung zum vorübergehenden axialen Immobilisieren einer Achse in einem Körper, dadurch gekennzeichnet, daß sie einen an der Achse (2) befestigten Ring (10, 36, 52) und ein Sperrelement (16, 40) aufweist, das lösbar in einer Öffnung des Körpers (1, 41) angebracht ist und im Inneren des letzteren zwei radiale Anschlagflächen (27, 29 - 35, 37) bildet, die eine relative Translationsverschiebung des Rings verhindern.

2. Vorrichtung nach Anspruch 1, dadurch gekennzeichnet, daß sie ferner Mittel (30, 32 - 48) zum Zurückziehen des Sperrelements (16, 40) aufweist, die von dem Ring (10, 36) und/oder dem Sperrelement selbst getragen sind.

3. Vorrichtung nach einem der vorhergehenden Ansprüche, dadurch gekennzeichnet, daß das Sperrelement (16, 40) an seinen Außenflächen Rückhaltevorsprünge (26, 46) und eine Fläche (28, 44) zur Anlage an der Außenfläche des Körpers aufweist.

4. Vorrichtung nach einem der vorhergehenden Ansprüche, dadurch gekennzeichnet, daß das Sperrelement (16, 40) nach außen durch eine Greifeinrichtung (48) verlängert ist.

5. Vorrichtung nach einem der Ansprüche 1 bis 3, dadurch gekennzeichnet, daß der Ring (10, 52) einen Nocken (30, 72) zum Auswerfen des Sperrelements (16, 60) bildet.

6. Vorrichtung nach einem der vorhergehenden Ansprüche, dadurch gekennzeichnet, daß der Ring einen Umfangsflansch (14, 34) aufweist, während das Sperrelement zwei Lippen (18, 19 - 38, 39) aufweist, die den Flansch auf der einen bzw. der anderen Seite des Flanschs frei umgeben.

7. Vorrichtung nach Anspruch 6, dadurch gekennzeichnet, daß der Flansch (14) eine zentrale Umfangsrippe eines in das Rohr eingesetzten Rings (10) ist.

8. Vorrichtung nach Anspruch 6, dadurch gekennzeichnet, daß der Flansch eine radiale endständige Rippe (34) eines Rings (36) mit L-förmigem Querschnitt ist.

9. Vorrichtung nach einem der vorhergehenden Ansprüche, dadurch gekennzeichnet, daß die Lippen des Sperrelements durch einen in seinem Mittelbereich verbreiterten Schlitz (24, 42) voneinander getrennt sind.

10. Vorrichtung nach einem der Ansprüche 1 bis 5, dadurch gekennzeichnet, daß der Ring (52) zwei Umfangsrippen (54, 56) zum Aufnehmen einer durch zwei radiale Anschlagflächen (64, 66) begrenzten Lippe (62) des Sperrelements aufweist.

11. Vorrichtung nach einem der vorhergehenden Ansprüche, dadurch gekennzeichnet, daß das Sperrelement (16, 60) profiliert ist und im Inneren des Rohres einen radialen Querschnitt in Form eines liegenden V mit abgerundeter Spitze aufweist.

## Claims

1. Device for temporarily axially immobilizing a shaft in a body, characterized in that it comprises a collar (10, 36, 52) integrally fixed to the shaft (2) and a locking element (16, 40) detachably fixed in an aperture of the body (1, 41) and forming, inside the latter, two radial abutment surfaces (27, 29 - 35, 37) preventing the relative displacement of the collar in translation.

2. Device according to Claim 1, characterized in that it further comprises means (30, 32 - 48) for withdrawing the locking element (16, 40), which are carried by the collar (10, 36) and/or by the locking element itself.

3. Device according to one of the preceding claims, characterized in that the locking element (16, 40) comprises retaining projections (26, 46) on its outer surfaces and a bearing surface (28, 44) for bearing against the outer surface of the body.

4. Device according to one of the preceding claims, characterized in that the locking element (16, 40) is externally extended by a holding means (48).

5. Device according to one of Claims 1 to 3, characterized in that the collar (10, 52) forms a cam (30, 72) for ejecting the locking element (16, 60).

6. Device according to one of the preceding claims, characterized in that the collar comprises a circumferential flange (14, 34) while the locking element comprises two lips (18, 19 - 38, 39) which freely engage on each side of this flange.

7. Device according to Claim 6, characterized in that the flange (14) is a central circumferential rib of a collar (10) fitted on the tube.

8. Device according to Claim 6, characterized in that the flange is a radial end rib (34) of an L-section collar (36).

9. Device according to one of the preceding claims, characterized in that the lips of the locking element are separated by a slot (24, 42) which is enlarged in its central part.

10. Device according to one of Claims 1 to 5, characterized in that the collar (52) comprises two circumferential ribs (54, 56) which receive a lip (62) of the locking element, said lip being delimited by two radial abutment surfaces (64, 66).

11. Device according to one of the preceding claims, characterized in that the locking element (16, 60) is profiled and has, inside the tube, a radial section in the shape of a reclining V having a rounded apex.
